# EUROPEAN PATENT SPECIFICATION

(11) **EP 3 753 785 B1**
(45) Date of publication and mention of the grant of the patent: **30.07.2025**
(21) Application number: 20180614.8
(22) Date of filing: 17.06.2020
(51) Int. Cl.: B60Q 1/00, F21S 43/241, F21S 43/243, F21S 43/249, B60S 1/56, B60S 1/60

(54) **A MEDIUM DISTRIBUTION ASSEMBLY AND A VEHICLE DESIGN ELEMENT INCLUDING SUCH AN ASSEMBLY**
MEDIENVERTEILUNGSANORDNUNG UND FAHRZEUGDESIGNELEMENT MIT SOLCH EINER ANORDNUNG
ENSEMBLE DE DISTRIBUTION DE SUPPORT ET ÉLÉMENT DE CONCEPTION DE VÉHICULE COMPRENANT UN TEL ENSEMBLE

(30) Priority: 17.06.2019 US 201916443188; 17.06.2019 DE 102019116393
(43) Date of publication of application: 23.12.2020
(73) Proprietor: Motherson Innovations Company Limited, London EC2N 2AX (GB)
(72) Inventor: HERRMANN, Andreas, 70327 Stuttgart (DE); THODAY, SAM, Hallet Cove, South Australia 5158 (AU); GIBSON, Brad Alexander, Bedfordale,WA 6112 (AU); FLYNN, Daniel Joseph, Quantong, Vic 3401 (AU); BELCHER, Simon, Lonsdale, South Australia 5160 (AU); CARUSO, Dean, Lonsdale, South Australia 5160 (AU)
(74) Representative: Holzwarth-Rochford, Andreas

(56) References cited:
- EP-A1- 1 911 630
- WO-A1-00/62938
- CN-U- 201 484 317
- CN-U- 205 261 400
- DE-A1- 10 330 526
- US-B1- 10 099 658

## Description

### BACKGROUND

### 1. Field of the Invention

The present disclosure relates to a medium distributing assembly for a vehicle design element according to the preamble of claim 1. Such a design element is selected from vehicle emblems, badges, logos and the like, which can provide a uniform medium output. Further the present disclosure relates to a design element with a medium distributing assembly of the present disclosure.

### 2. Related Art

EP 1 911 630 A1 describes a medium distributing assembly for a vehicle design element according to the preamble of claim 1. The known assembly has a carrier provided with transparent plastic material, and a light source e.g. LEDs, which is arranged behind or besides the carrier. An emblem representing a logo is provided, where the emblem is opaque. A light conductor has light deflecting surfaces, which direct the light of the light source to a rear side of the emblem. The light conductor has light discharge surfaces that are facing back edge areas of the emblem. The light discharge surfaces do not laterally project above the back edge areas of the emblem.

WO 00/62938 describes a headlamp cleaning system which has a headlamp especially suited to HID or tungsten halogen applications including a source of light and a polycarbonate lens for distributing the light and a control system for automatically controlling a pump for distributing washer fluid against the lens each time that the vehicle ignition is turned on and whenever a sensor for sensing dirt build-up on the lens signals the presence of dirt build-up thereon and the control system continues the cleaning cycle until all dirt is removed from the lens.

According to one aspect, the invention is directed to a light assembly which can provide a uniform light output without the use of light guide optic features and without the light source being viewable. Specifically it refers to a light guide, the light guide including a plurality of light receiving surfaces, and a plurality of light sources, preferably in form of light emitting diodes (LEDs) on a circuit board, the light sources being arranged adjacent to and directed towards respective light receiving surfaces.

An aesthetic feature which has become desirable in automotive applications is to provide exterior badges and emblems on vehicles which feature backlighting of key features of the particular badge or emblem. Many automotive badges have an overall circular profile or feature large annular elements, and it is desirable that this annularity is able to be backlit with an even (uniform or homogenous) luminance using light emitting diodes (LEDs) input. An LED is a directional light source having a relative luminous intensity that decreases as the viewing angle is increased. This may result in the appearance of bright or hot spots to an external viewer of the badge.

Lighting systems that provide a uniform luminous intensity are known, for example systems using expensive organic light emitting diode (OLED) technology or complex lens and reflector arrangements. Highly diffusing materials are also used but these have the drawback of giving a milky or hazy appearance and have poor optical efficiency. Optic features may also be used on clear materials to diffuse light, but these have the drawback that the optic features are visible in the unlit state which is undesirable. A further desirable feature is that the LED input is not directly visible to the external viewer of the badge.

According to a second aspect, the invention is directed to a fluid distributing assembly for a vehicle design element. The automotive industry is experiencing an increase in technology penetration, which will dynamically impact the automotive radar market in the future. The number of electromagnetic wave emitting and receiving devices in vehicles is significantly increasing, driven by increased safety and vehicle autonomy requirements. Especially radar systems using electromagnetic radiation with bandwidths of 24GHz and 77 GHz, preferably located at the front of the vehicle, are used for the control of various systems such as autonomous cruise control. To increase the outer appearance of the vehicle, such radar system are often located behind vehicle design elements such as the car emblem. The design element acts in these configurations as so called radome.

Contaminations on a surface of such a radome like dust, dirt, snow, ice etc. leads to the problem that the function of the safety critical drive assistance system located at least partly behind the radome, especially of a radar system, cannot be ensured at all times. These impurities can occlude radar sensors, reduce accuracy and the reliability of information provided by the system. Overall, such impurities can have an impact on the safe manoeuvring of the vehicle.

It is the object of the present disclosure to further develop the known medium distributing assembly for a vehicle design element to overcome the drawback of the prior art.

### SUMMARY

This object is achieved by the features of the characterizing part of claim 1.

Preferred embodiments of the medium distributing assembly for a vehicle design element are described in claims 2 to 9.

One embodiment can be characterized in that when the fluid is directed, especially sprayed, onto at least one first surface of the design element, the first surface of the design element is adverted to at least one antenna emitting and/or sensing electromagnetic radiation in at least one first frequency band.

For the before described embodiment is preferred that the antenna is and/or comprises at least one radar antenna and/or the first frequency band is and/or comprises at least one radar frequency, especially 10MHz to 130 GHz, preferably 20 GHz to 100 GHz, more preferred 20Ghz to 30 GHz, 70GHz to 80GHz and/or 90GHz to 100GHz, most preferably 24 GHz, 77 GHz or 93GHz.

For the two before described embodiments it is proposed that the design element is at least partially transmissible for electromagnetic radiation and comprises at least one first area being transmissible for electromagnetic radiation of at least the first frequency band, and being reflective, semitransparent and/or opaque for electromagnetic radiation falling onto the first surface and having a frequency within at least one second frequency band, wherein the second frequency band preferably comprises 384THz to 789THz and/or visual light.

With claim 10 a vehicle design element including and/or being connected to at least one medium distributing assembly according to the claimed subject matter is provided.

Claims 11 to 16 describe preferred embodiments of the vehicle design element.

Further advantageous embodiments can be characterized in that the sensing element is sensing contaminations of the first surface in a direction being mainly perpendicular to a normal direction of the first surface and/or parallel to the first surface.

It is furthermore preferred that the medium guide, especially the second medium guide, the medium receiving element, especially of the second medium guide, the medium exit element, especially of the second medium guide, and/or the sensing element is/are at least partly located behind at least one bezel of the design element.

Also the assembly might be characterized in that the bezel is at least partly opaque for the first radiation and/or second radiation and/or transparent and/or semitransparent for the third radiation.

The invention also provides a vehicle design element including and/or being connected to at least one medium distributing assembly, especially light assembly..

When combining the light assembly with the fluid distributing assembly according to the invention, such a combination leads especially to synergetic effects. The additional use of the light assembly in combination with the fluid distributing assembly increases for example the effectiveness of a cleaning of the design element. For example the detection of contaminations being located on the design element can be improved. By illuminating the surface of the design element the sensitivity of detection of contaminations by the sensing element can be improved. The use of the light assembly allows to illuminate the surface of the design element with light of defined characteristics. In this way the measurement by the sensing element becomes less dependent, if not independent, from external factors like the characteristics of the surrounding light. Preferably, in case the measurement result of the sensing element differs from a reference measurement result of the sensing element for a not contaminated design element by a predefined threshold it is concluded that the design element has to be cleaned by use of the fluid distributing assembly. Also the cleaning result can be more precisely analysed and in case contaminations remain on the design element and are sensed by the sensing element a cleaning cycle can be repeated or a respective request for a manual cleaning by a user can be requested and/or initiated.

### BRIEF DESCRIPTION OF DRAWINGS

Embodiments of the present invention will be discussed with reference to the accompanying drawings wherein:
- Figure 1: is an exploded view of a vehicle design element including a light assembly;
- Figure 2: is a plan view of an annular light guide with circumferential flanges and wedge shaped protrusions;
- Figure 2a: is a plan view of an annular light guide with circumferential cylinders and light entry points at circumferential disconnections of the cylinder;
- Figure 3: is a perspective view of the annular light guide with circumferential flanges and wedge shaped protrusions;
- Figure 3a: is a perspective view of the annular light guide with circumferential cylinders and light entry points at circumferential disconnections of the cylinders;
- Figure 4: is a cross-sectional view of the annular light guide with circumferential flanges and wedge shaped protrusions;
- Figure 4a: is a cross sectional view of the light assembly with circumferential cylinders;
- Figure 5: is a cross-sectional view of the light assembly;
- Figure 6: is an exploded view of an automotive badge;
- Figure 7: is a plan view of the automotive badge assembly of Figure 6;
- Figure 8: is a plan view of the automotive badge assembly in an un-lit state;
- Figure 9: is a plan view of the automotive badge assembly in a lit state;
- Figure 10: is perspective view of a light guide with circumferential flanges;
- Figure 11: is a cross-sectional view of the badge assembly of Figure 6;
- Figure 12: is an enlarged cross-sectional view of the detail at I of Figure 11 showing in more detail the construction of the automotive badge assembly;
- Figure 13: is an isometric view of a schematic of the automotive badge assembly when in a lit state;
- Figure 14: is a plan view of a schematic of the automotive badge assembly when in a lit state; and
- Figure 15: is a perspective view of a light guide, according to an alternative embodiment.
- Figure 16: is a perspective view onto a design element incorporating a fluid distributing assembly in addition to a light assembly according to the present invention;
- Figure 17: is a perspective side-view in the direction A of fig. 16 onto the fluid distributing assembly of figure 16 with a sensing element in form of a camera positioned at a first position;
- Figure 18: is a schematic cut view of the detail X of the embodiment shown in figure 17;
- Figure 19: is a schematic cut view according to detail X of an alternative embodiment;
- Figure 20: is a perspective side-view onto an alternative embodiment of a fluid distributing assembly with a sensing element located at a different position;
- Figure 21: is a view onto the assembly of figure 20 from a direction B in figure 20; and
- Figure 22: is a perspective cut-view along the axis C in figure 21.

In the following description, like reference characters designate like or corresponding parts throughout the figures.

### DESCRIPTION OF EMBODIMENTS

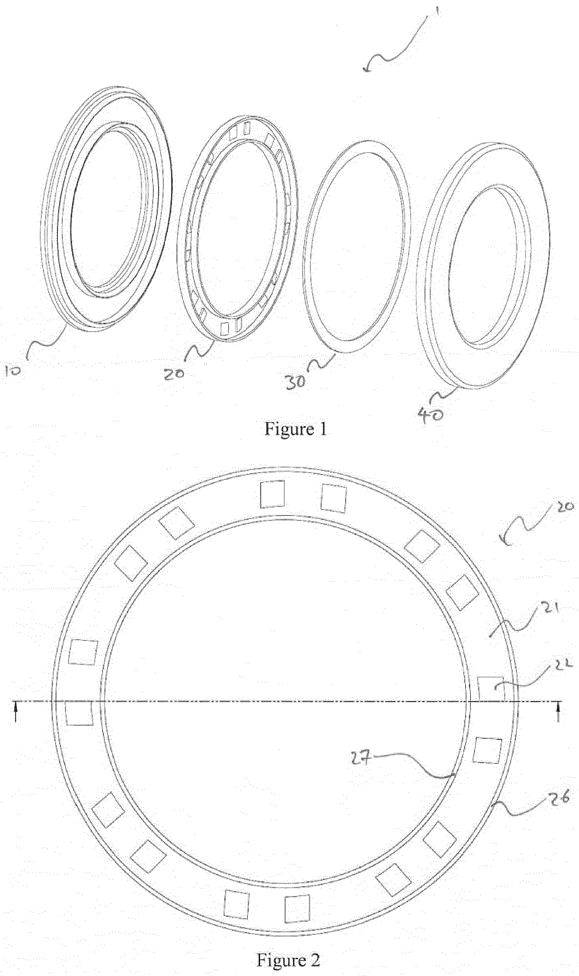

Referring now to Figure 1, there is shown an exploded light assembly 1, which has a housing 10, a light guide 20, especially representing a first medium guide, an annular printed circuit board (PCB) 30 featuring a plurality of light emitting diodes (LEDs, not shown), and a lens 40. The light assembly 1 provides light output such that a viewer would see a homogenous annular light output.

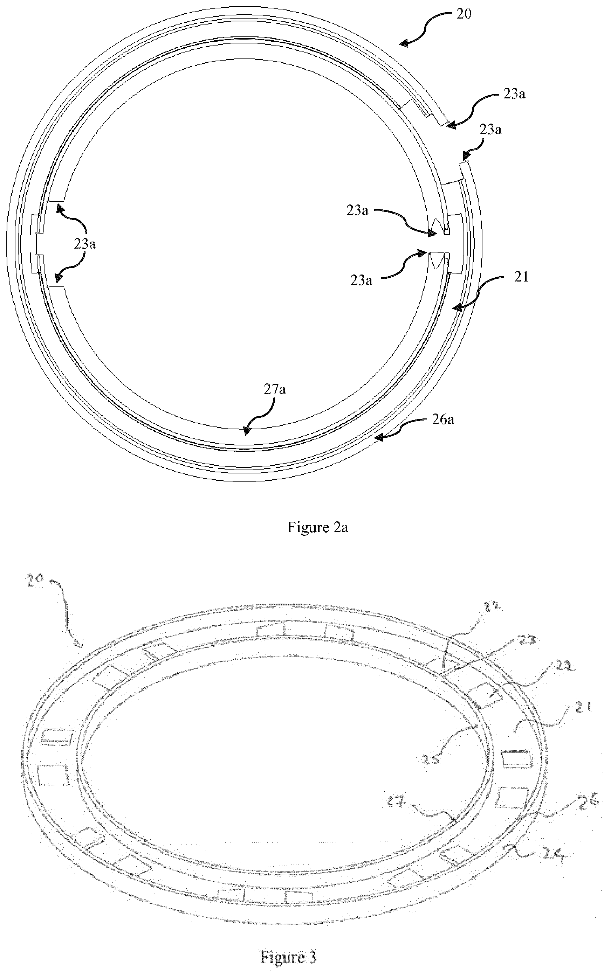

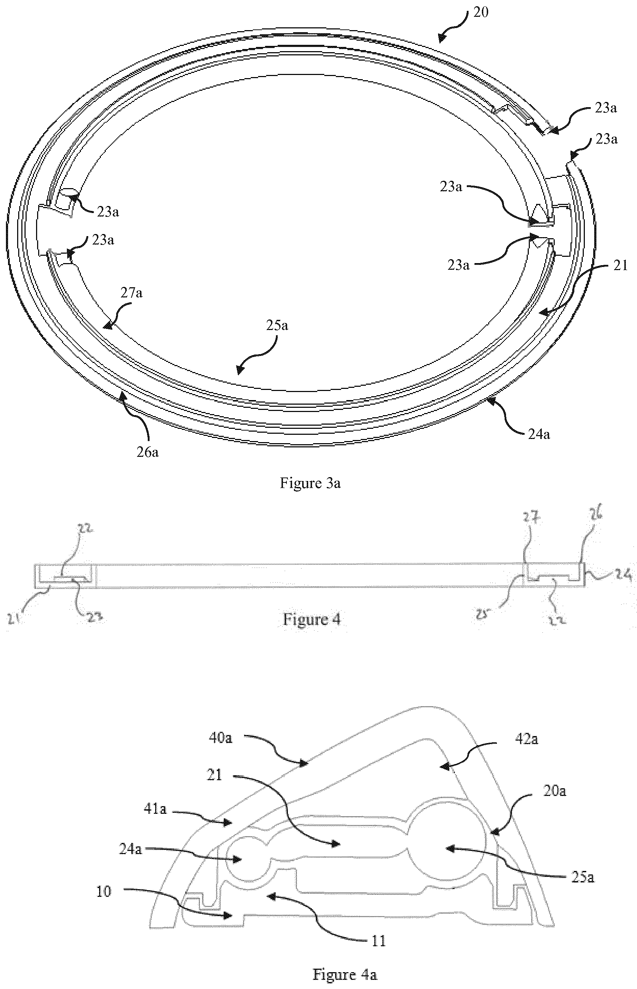

Referring now to Figures 2 and 3 which show a plan and perspective view of the light guide 20, which has an annular base 21, on which there are a plurality of wedge shaped protrusions 22 which feature light receiving surfaces 23. The light guide further comprises an outer circumferential flange 24 and an inner circumferential flange 25, both of which extend away from the annular base 21 towards viewable outer and inner light exits 26 and 27, respectively.

Referring now to Figure 2a and 3a which show a plan and perspective view of the light guide 20, which has an annular base 21. On this annular base could be a plurality of wedge shaped protrusions which feature light receiving surface or light receiving surfaces, could exist at defined surface breakages around the circumferential flange 23a. The light guide further comprises an outer circumferential cylinder 24a and an inner circumferential cylinder 25a, both of which extend away from the annular base towards viewable outer and inner light exits 26a and 27a respectively.

Whilst the flanges 24, 25 appear perpendicular to the base 21, equally they could be splayed inwardly or outwardly without changing the functionality of the light guide 20. It can be seen that the light guide transitions from the base to the flanges sharply, the sharp transition facilitating internal reflection of light through the light guide. In the preferred embodiment, this transition would have a radius of less than 2% of the height of the flange, however it is appreciated that an alternative embodiment with a transition radius of less than 10% of the height of the flange would still produce desirable results.

In the case of the circumferential cylinders, these could be placed at different angles to the annular base, dependant on the position of final light output required and inner and outer cylinders can have various configurations of diameters.

The wedge shaped protrusions 22 are equally spaced around the base 21 in pairs, with each pair having their respective light receiving surfaces 23 adjacent one another, and wherein in use, each light receiving surface 23 is orientated substantially orthogonal to the base 21 and will receive light from one of the plurality of LEDs, which are positioned adjacent to said receiving surfaces 23.

Figure 4 shows how the outer and inner circumferential flanges 24 and 25, are configured such that they are orthogonal to the base 21. It can also be seen that, in this particular embodiment, the outer and inner light exits 26 and 27, are parallel to the base 21, thus also being orthogonal to the light receiving surfaces 23.

Figure 4a shows how the outer and inner circumferential cylinders 24a and 25a are configured relative to the base 21. It can also be seen that, in this particular embodiment, the outer and inner light exits 26a, 27a can be at various segments around the diameter of the cylinder.

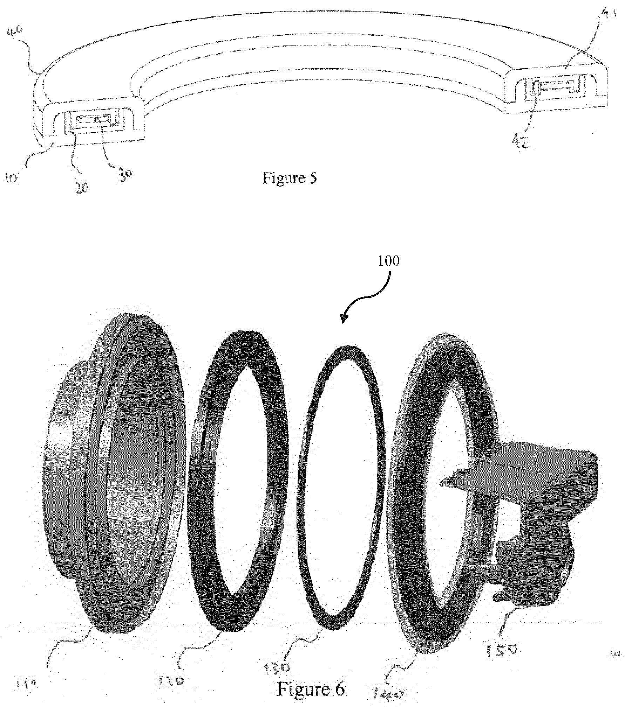

Figure 5 shows a cross sectional view of the light assembly 1, showing how components of the light assembly 1 are assembled. The housing 10 forms the backing for the light assembly and may be manufactured from a black weather resistant plastic such as acrylonitrile styrene acrylate (ASA) or acrylonitrile butadiene styrene (ABS), or (PC) or polycarbonate blend and is configured to receive the light guide 20 which is mounted to the housing 10. The housing material optical properties can be selected to increase or decrease the final light output of the light assembly. A highly reflective material will increase the final light output level, a non-reflective material will reduce the final light output level of the light assembly. Transitional optic features on the housing 10 can be incorporated around the circumference of the cylinders to increase or decrease reflected light into the light guide, thereby creating a homogenous final light output of the light assembly. The PCB 30 is then mounted on the light guide 20. The PCB 30 may be coated white around the plurality of LEDs such that the light assembly 1 does not emit a green glow. The lens 40 is then connected or joined to the housing 10 (e.g. by welding) such that it sits over the PCB 30 and light guide 20.

The lens 40 is made of an outer component 41 and an inner component 42. The outer component 41 may be manufactured from a clear polycarbonate (PC) and the inner component 42 may be overmoulded on to the inner surface of the outer component 41, using opaque PC. The lens inner component 42 material optic properties can be selected to increase or decrease the reflected light back into the light guide 20. A highly reflective material will increase the final light output level, a non-reflective material will reduce the overall final light output level of the light assembly. The lens 40 is configured such that the outer or inner component 41 and 42 joins to the housing 10 and the inner component 42 sits over the top of the PCB 30 and wedge shaped protrusions 22 such that it masks the PCB, and LEDs from being directly viewable through the lens 40.

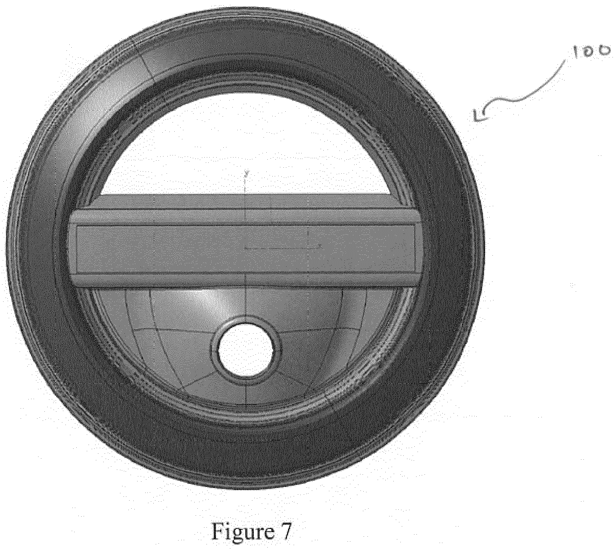

Referring now to Figures 6 and 7 which show a light assembly as an alternative embodiment in the form of an automotive badge assembly 100. The badge 100 comprising a housing 110, a light guide 120, a PCB 130, a lens 140 and a garnish 150.

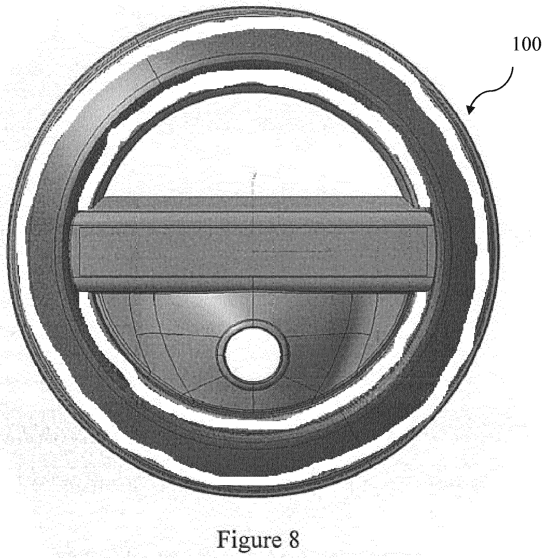

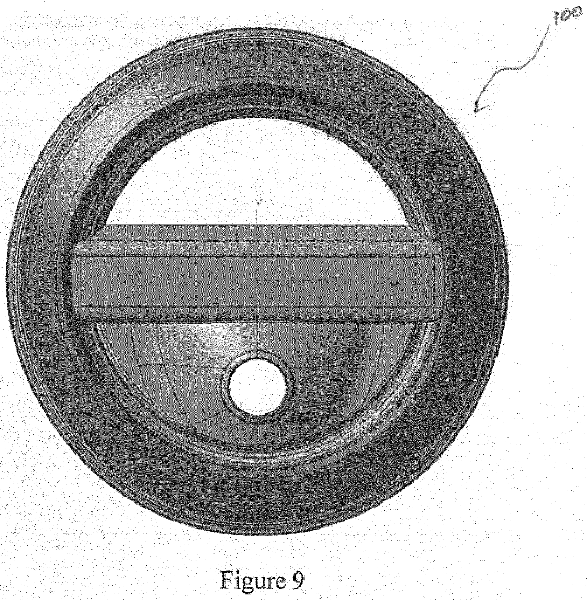

Figures 8 and 9 show plan views of the badge assembly 100 in un-lit and lit states respectively. In Figure 8, the light guide 120 is not visible and the lens 140 has a uniform chrome-like appearance. Figure 9 shows that when the LED light sources are activated, the light guide 120 lights up and emits light through the lens 140 in a substantially uniform luminous intensity.

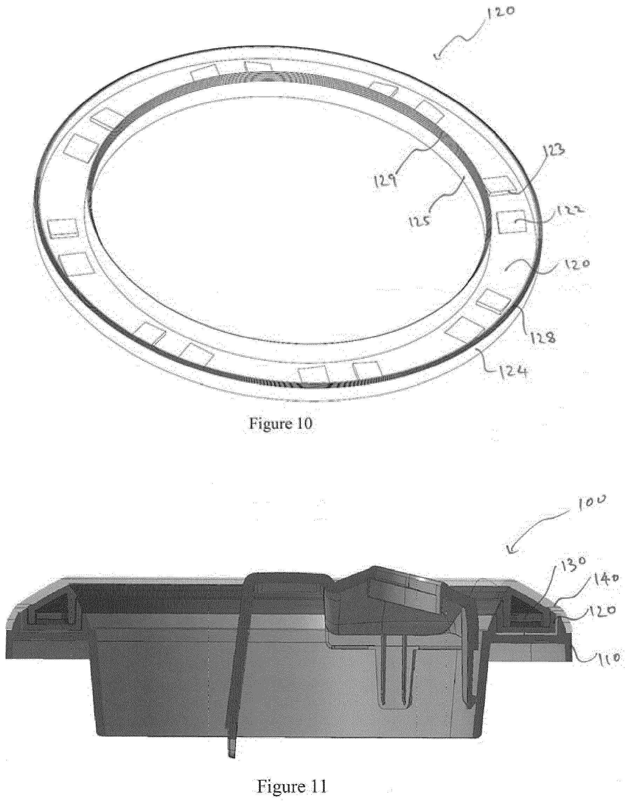

Referring now to Figure 10 which shows a perspective view of the light guide 120, which has a substantially annular base 121, on which there are a plurality of wedge shaped protrusions 122 which feature light receiving surfaces 123. The light guide further comprises a non-continuous outer circumferential flange 124 and non-continuous inner circumferential flange 125, both of which extend away from the base 121. The circumferential flanges further feature stepped light exits 126 and 127.

Figure 11 shows a cross sectional view through the line A-A of the badge assembly 100 of Figure 7. The configuration of the housing 110, light guide 120, PCB 130 and lens 140 of the badge assembly 100 is the same as that of the light assembly depicted in Figure 5.

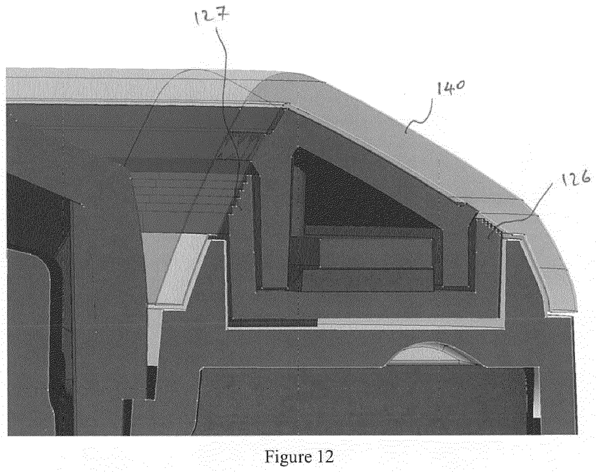

Referring now to Figure 12 which shows a detailed sectional view of the badge assembly 100 of Figure 11. It is apparent in this view that the slope of the stepped light exits 126 and 127, of the light guide 120 are configured such that they follow the slope of the interior surface of the lens 140.

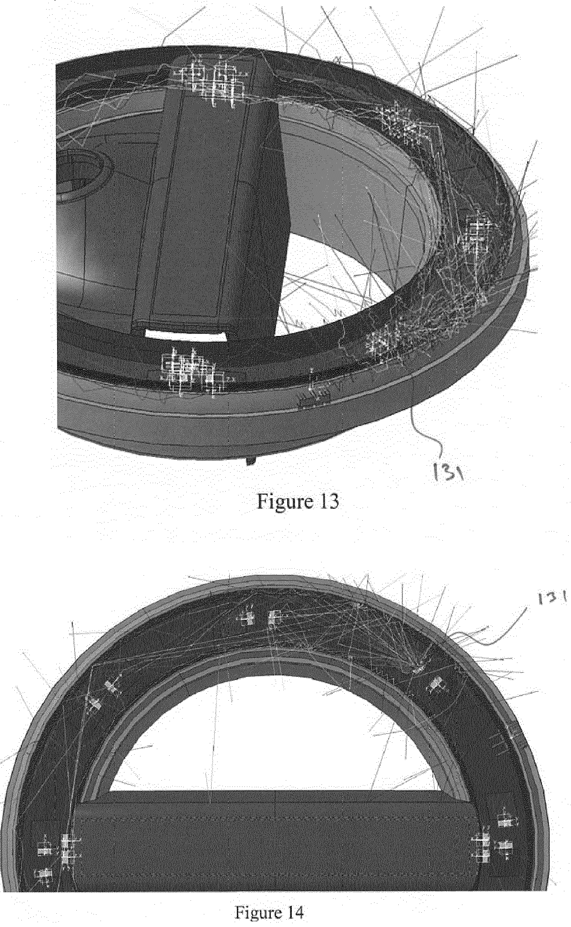

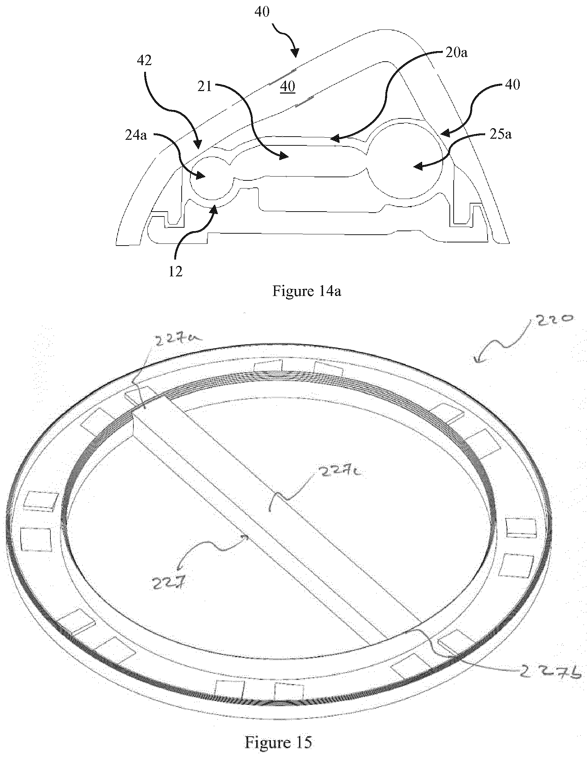

Figures 13 and 14 show a schematic of the badge assembly of Figure 7 when in a lit-state, illustrating how light rays behave when the light guide 120 is lit by a single LED light source 131, and the light rays enter the light guide 120 and are guided toward the stepped light exits 126 and 127. It can be seen that the light output is generally annular, however due to the non-continuous inner and outer circumferential flanges 124, 125, the light output is not continuous.

The light guide 120 is referred to as a particle filled lens to distinguish it from a crystal clear lens (or light guide) used in the manufacture of a traditional light guide. In a traditional light guide, light is transmitted from a light source to a point at some distance from the source with minimal loss by total internal reflection.

In this particle filled light guide 120, the transmission of light from the light source to the light exiting surfaces 126 and 127, is achieved through a combination of the use of internal reflection and light scattering particles. Internal reflection is encouraged through the geometry of the light guide 120, wherein light rays enter the light guide through the plurality of light receiving surfaces 123, and are guided through the wedge shaped protrusions 122 and into the base 121.

As can be seen in Figure 14 in combination with figure 10, the orientation of the light receiving surfaces 123 with respect to the light guide 120 results in the light rays entering the light guide 120 approximately tangentially. The internal geometry of the light guide 120 encourages internal reflection with the incidence angle of the bulk of the light rays approaching the inner and outer walls of the outer and inner circumferential flanges 124 and 125, such that internal reflection is promoted, and the light rays will also reflect off the bottom surface of the base 121 such that they will travel up the inner and outer circumferential flanges 124 and 125, and exit through the outer and inner light exits 126 and 127.

As would be appreciated, the implementation of the stepped light exits 126 and 127, of this embodiment is for the purpose of promoting internal reflection within the light guide 120 when the light guide 120 is to sit below a sloped lens 140. Should the light guide 120 have instead featured a sloped light exit to match the lens 140, a large amount of light rays would have exited the light guide 120 at an undesirable location and/or angle.

Most light rays that enter the light guide 120 will encounter light scattering particles that alter the direction of the light rays. The effect of this light scattering is that light rays will spread throughout the light guide 120, further encouraging the light rays to exit through the light exiting surfaces 126 and 127 and also ensuring that an even distribution of light output occurs.

In the embodiment of the circumferential cylinder light guide 120 and light entry points at disconnected surfaces on the circumference of the cylinders, the annular base could be manufactured from non-diffusing clear material to promote total internal reflection and minimise losses through the annular base. The cylinders are then manufactured from particle filled, diffusing clear material to scatter the light and exit it through the light exit surfaces.

Figure 14a shows a detailed section of the assembly with a light guide using circumferential cylinders. In the light guide of 20a internal reflection is encouraged through the geometry of the inner and outer cylinders, wherein light rays enter the light guide through the light receiving surfaces at disconnections around the circumference of the light guide 23a, and are guided around the circumference of the cylinders. Due to the particle filled nature of the cylinders 24a and 25a the light rays are altered in direction if they encounter a light scattering particle. An amount of light rays will exit through the light exiting surfaces at an angle and direction matching the light exit windows of the lens 40 and these will be visible to a viewer of the light assembly.

A proportion of light rays will scatter at an angle and direction that do not match the light exit windows of the lens 40. The efficiency of the light assembly can be increased by reflecting these light rays from the lens inner component material 41 or the housing material 10 back into the light guide 20a. These reflected light rays then have an opportunity to be scattered in a direction that does match the light exit windows of the lens.

Additionally, focusing optical geometry 12 can be included in the housing 10 to increase the amount of reflected light rays back into the light tubes. This geometry can be varied around the circumference of the light cylinders to improve the homogeneity of the overall light output of the light assembly.

The light scattering particles may be titanium dioxide particles of sufficient size and concentration such that the light guide appears transparent when un-lit while providing a substantially uniform luminous intensity surface output when lit.

Figure 15 shows a perspective view of a light guide 220 according to an alternative embodiment, having the same features as the light guide 120. The light guide 220 also features a bridging member 227, manufactured from the same material as the light guide 220, which is located inside and bisects the substantially annular shape of the light guide 220. The bridging member 227 has a substantially trapezoidal cross-section and has first and second ends which are disposed as light receiving surfaces 227a, 227b, the bridging member 227 also featuring a light emitting surface 227c along its major surface.

In this embodiment, a PCB includes additional LEDs positioned adjacent to the light receiving surfaces 227a, 227b to direct light into the bridging member 227, wherein when lit, will provide a substantially uniform luminous intensity surface output. The bridging member 227 can be used in conjunction with the garnish (which covers the bridging member 227) to illuminate additional detail. For example, the garnish could feature cut-outs in the form of lettering or a logo, which would then be illuminated by the illuminated bridging member 227.

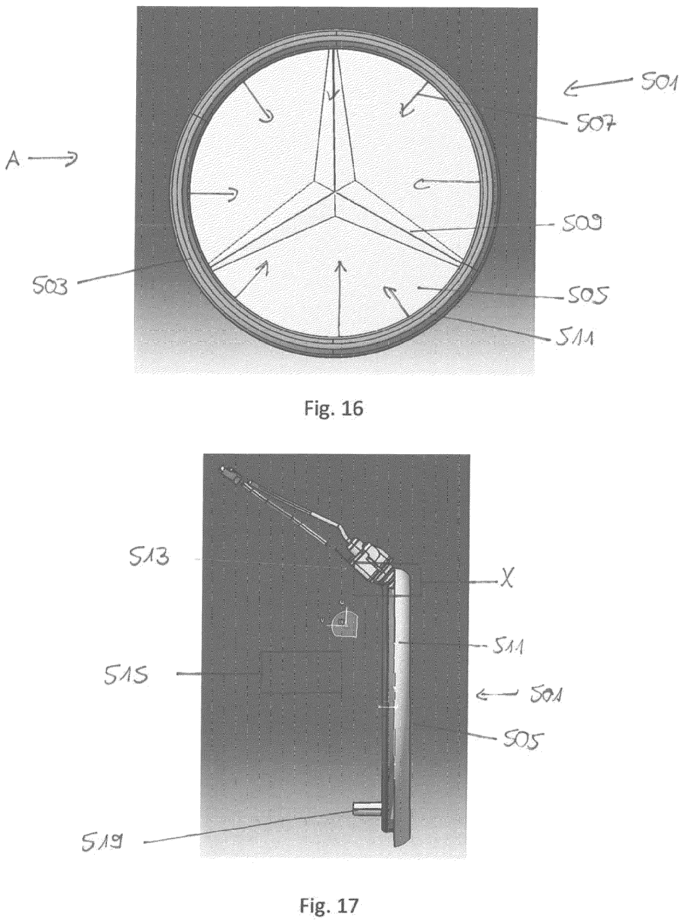

Figure 16 shows a schematic view of a design element in form of a radome 501 incorporating a fluid distributing assembly 503. Via the fluid distributing assembly 503 it is possible to spray a cleaning fluid, in particular a cleaning liquid, on the first surface 505 of radome 501. Via not shown medium exit elements in form of spray nozzles, especially of a second medium guide, a respective cleaning fluid, especially representing a second medium, is sprayed in the directions represented by arrows 507 in figure 16. By using the cleaning fluid, any contaminations existing on the first surface 505 will be removed.

The first surface 505 furthermore comprises a design element in form of a logo 509. The logo 509 as well as the first surface visible in figure 1 represents a first area that is transmissible for electromagnetic radiation of the at least first frequency band that is transmitted and received by an antenna located behind the radome 1.

The first surface 5 and the logo 509 are however opaque and/or reflective for electromagnetic radiation in a second frequency band, especially visual light. In this way the antenna, located behind the radome 501, is not visible from the perspective shown in figure 16.

As can be seen in figure 16, the first surface 505 is surrounded by a bezel 511. To clean the first surface 505 from any contaminations, the cleaning fluid is ejected at pressure from the array of not shown spray nozzles around the circumference of the radome 501. The spray nozzles are housed within the bezel 511 and can be thus hidden from a viewer. Behind the ring bezel 511 furthermore a medium guide, especially a second medium guide in form of a spray nozzle manifold is located to deliver the cleaning fluid to the spray nozzles.

In figure 17, a schematic side view of the radome 501 of figure 16 is shown. As can be seen in figure 17 behind the bezel 511, a sensing element in form of a camera 513 is located. The camera 513 is angled relative to the first surface 505 in such a way that contaminations on the first surface 505 can be viewed and detected. This detection is especially improved by, preferably simultaneous, illumination of the first surface 505 by a light guide as described before.

To allow a detection of the surface 505 by a camera 513, a camera viewing aperture is provided within the bezel 511. This aperture is preferably placed on the underside of the bezel 511 to ensure that the camera remains obscure from view onto the first surface 505.

By using the camera 513 in the position shown in figure 17, the camera 513 can furthermore be used for other drive assistance systems like a parking assistant camera or a rear view camera in case the radome 501 is located on a rear facing side of a not shown vehicle.

As can be taken from figure 17, furthermore an antenna 515 is located relative to the camera 513 so that the camera 513 does not hinder the antenna 515 to transmit and receive electromagnetic radiation in the first frequency band through the radome 501, especially the first surface 505 and the logo 509. Furthermore, in figure 17, a connector 519 representing a medium receiving element is provided. The connector 519 can be connected to a not shown fluid reservoir in which the cleaning fluid is stored. The connector 519 allows to distribute the cleaning fluid via the spray nozzle manifold to the spray nozzles.

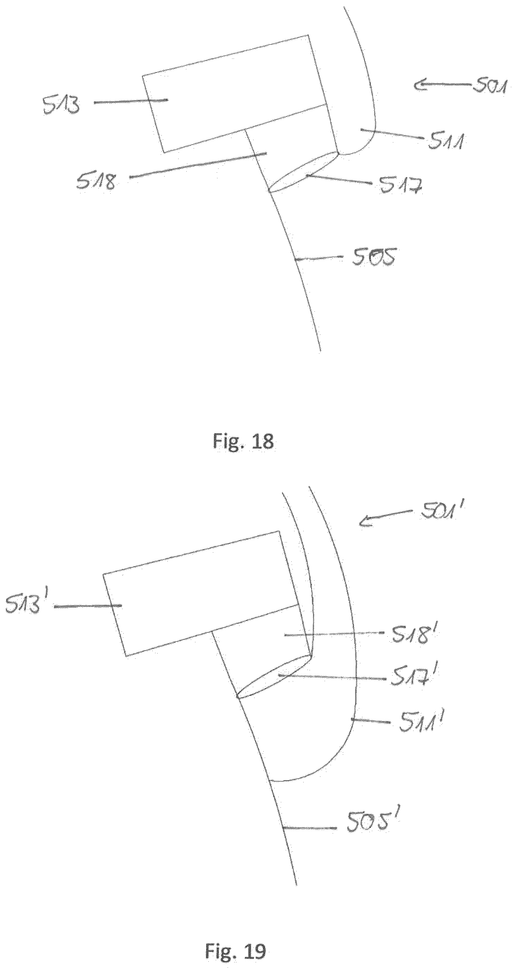

In figure 18, a detailed view on the detailed X in figure 17 is shown. As can be seen, the camera 513 is located in such a way behind the bezel 511 that a view onto the surface 505 via the aperture 517 of a lens 518 of the camera 513 is possible.

Due to the viewing angle of the camera 513, the camera 513 can detect any impurities on the surface 505. Once impurities are detected by the camera, especially supported by an illumination with the help of a before described light guide, via a not shown control device and based on the signals of the camera 513, cleaning fluid is pumped via the connector 519 to the fluid nozzles so that the cleaning fluid is sprayed on the first surface 505 to clean it.

In figure 19, a view of an alternative embodiment of the radome 501, similar to the detail shown in figure 18, is shown. The elements of the radome 501' that are similar to the elements of the radome 501, have the same reference signs however with one apostrophe. In contrast to the radome 501, the radome 501' comprises a bezel 511' that also covers the aperture 517' of the lens 518' of the camera 513'. In particular a lens 508' of the camera 513' is placed behind the bezel 511'. In this area, the bezel 511' is semitransparent, for at least part of the radiation sensed by camera 513' for example covered with a pvd-coating of a transparent resin comparable to a chrome plastic mirror coating on polycarbonate. Through the semitransparent coated bezel 511', the camera can view the first surface 505' through the bezel 511'.

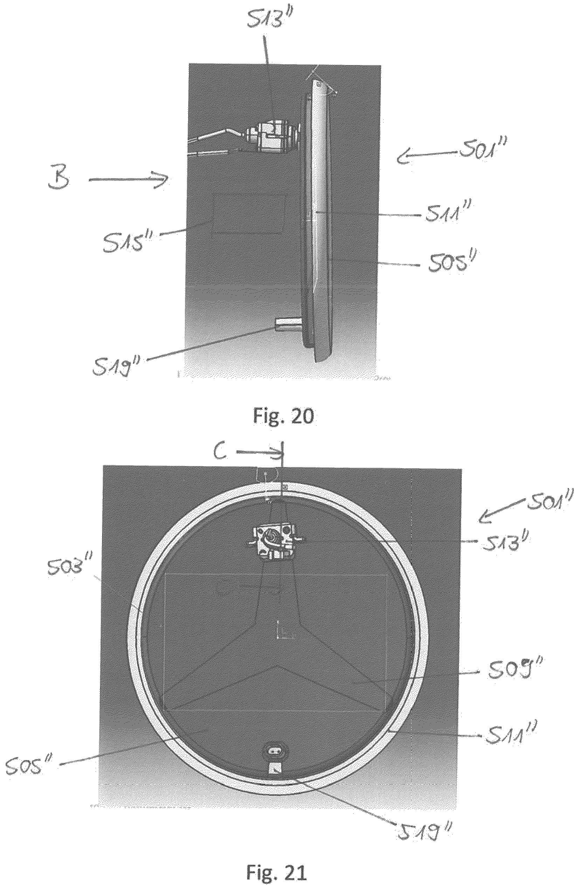

In figure 20 an alternative embodiment of a radome 501" is shown. The elements of the radome 501" which correspond to the elements of radome 501, have the same reference signs, however with two apostrophes.

In figure 21 a view of the radome 501" from the direction B in figure 20 is shown. As can be seen from the figures 20 and 21, the camera 513" is placed behind the first area 520" of the radome 501, being coated so that it is transparent for electromagnetic radiation emitted by the antenna 515" and being generally opaque for electromagnetic radiation of the second frequency band, especially visible light. However, the first surface 505" has a second area 521" in which the first surface is at least semitransparent for electromagnetic radiation of a third frequency band.

This third frequency band represents sensing radiation that is used by the camera 513" to detect any impurities on the surface 505". This area 521", allowing the camera 513" to look through the radome 501", might be realized in form of a hole or transparent window in a rear overmold of the radome 501" to allow the camera 513" to view the first surface 505".

The second area 521" might comprise a coating that is transparent enough for the camera 513" to look through and detect contaminations. Again, the camera 513" is placed just outside the receiving and emission field of the antenna 515" to ensure that it does not disturb the sending and receiving characteristics of the antenna 515".

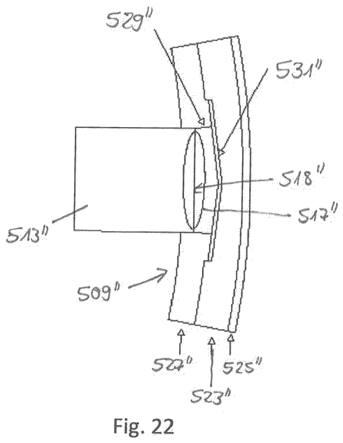

In figure 22, a schematic cross-section of the radome 501" of the figures 20 and 21 is shown along the direction C in figure 21.

As can be seen from figure 22, the camera 513" is located in the area of the logo 509". Generally, the radome 501" comprises a substrate 523" that might be covered optionally by a protective hardcoat 525". On the side of the substrate 523" facing the antenna 515" and the camera 513", the substrate 523" is overmolded with an opaque and reflective overmold 527", representing a first coating, for example black IS, ABS or the like, to form logo 509". With this overmold 527", it is further secured that the radome 501" is opaque for visible light, however, is at least semitransparent for the electromagnetic radiation of the antenna 515".

Within the overmolding 527", the hole 529" is formed. Alternatively, a transparent window can be formed within the overmolding 527", for example polycarbonate or acrylic plug or mold. In the area of the hole 529", the backside of the substrate 523" is coated by a material 531" being transparent for the radiation of the antenna 515" and at least semi-transparent for sensing radiation of camera 513". Preferably the semi-transparency of material 531" is so that visual light falling onto the first surface 505" is mostly reflected, to form logo 509" however that the camera 13" can sufficiently receive signals to detect any impurities on the surface of the radome 501".

Thus in the embodiments shown in the figures 20 to 22, the camera 513" is placed behind a coated section/area of the radome 501". The coating might be for example AlGe having a transparency of 10% to allow a look through for the camera 513".

Throughout the specification and the claims that follow, unless the context requires otherwise, the words "comprise" and "include" and variations such as "comprising" and "including" will be understood to imply the inclusion of a stated integer or group of integers, but not the exclusion of any other integer or group of integers.

The reference to any prior art in this specification is not, and should not be taken as, an acknowledgement of any form of suggestion that such prior art forms part of the common general knowledge.

It will be appreciated by those skilled in the art that the invention is not restricted in its use to the particular application described. Neither is the present invention restricted in its preferred embodiment with regard to the particular elements and/or features described or depicted herein. It will be appreciated that the invention is not limited to the embodiment or embodiments disclosed, but is capable of numerous rearrangements, modifications and substitutions without departing from the scope of the invention as set forth and defined by the following claims.

For instance, the light output can either be completely annular, or partially annular, additionally, the light output does not have to be perfectly annular, the same homogenous light output could be achieved with a light guide shaped to define an elliptical annular, smooth square, or similar base with circumferential flanges. The circumferential flanges may describe a complete circumference or alternatively maybe non-continuous describing a part circumference.

### REFERENCE SIGNS

- 1: light assembly
- 10: housing
- 12: focusing opical geometry
- 20, 20a: ligh guide
- 21: annular base
- 22: protrusions
- 23, 23a: light receiving surfaces
- 24: outer circumferencial flange
- 24a: outer circumferencial cylinder
- 25: inner circumferencial flange
- 25a: inner circumferencial cylinder
- 26, 26a: outer light exits
- 27, 27a: inner light exists
- 30: printed circuit board
- 40,40a: lens
- 41, 41a: outer component
- 42, 42a: inner component
- 100: badge assembly
- 110: housing
- 120: ligh guide
- 121: annular base
- 122: protrusions
- 123: light receiving surfaces
- 124: non-continous outer circumferencial flange
- 125: non-continous inner circumferencial flange
- 126: stepped outer light exits
- 127: stepped inner light exists
- 130: printed circuit board
- 131: LED light source
- 140: lens
- 150: garnish
- 220: ligh guide
- 227: bridging member
- 227a, 227b: light receiving surfaces
- 227c: light emitting surface
- 501, 501', 501": radome
- 503, 503": fluid distributing assembly
- 505, 505', 505": surface
- 507: direction
- 509, 509": logo
- 511, 511', 511": bezel
- 513, 513', 513": camera
- 515, 515": antenna
- 517, 517', 517": aperture
- 518, 518', 518": lense
- 519, 519": connector
- 520": area
- 521": area
- 523": substrate
- 525": hardcoat
- 527": overmolding
- 529": hole
- 531": material
- A, B, C: direction
- X: detail

## Claims

1. A medium distributing assembly for a vehicle design element,
the assembly comprising:
at least one medium guide comprising:
• at least one medium receiving element; and
• at least one medium exit element,
wherein the at least one medium exit element has at least partly an annular form,
wherein a first medium guide is a light guide (20, 20a, 120, 220) and a first medium is light, and
wherein the light guide (20, 20a, 120, 220) includes a plurality of light receiving surfaces (23, 23a, 123, 227a, 227b); and
a plurality of light sources the light sources being arranged adjacent to and directed towards respective light receiving surfaces (23, 23a, 123, 227a, 227b); the plurality of light sources are in form of light emitting diodes (LEDs) (131) on a printed circuit board (30, 130),
wherein the light guide (20, 20a, 120, 220) is shaped to define an annular base (21, 121) lying in a first plane and at least one circumferential flange (24, 25, 124, 125) or cylinder (24a, 25a) disposed generally orthogonal, or inwardly or outwardly splayed to the first plane, the flange (24, 25, 124, 125) or cylinder (24a, 25a) extending away from the annular base (21, 121) towards a viewable annular light exit (26, 26a, 27, 27a, 126, 127),
**characterized by**
at least one second medium guide to deliver a second medium that is and/or comprises at least one fluid, and
at least one sensing element adapted for detection of contaminations on at least one first surface of the design element,
wherein the sensing element comprises at least one optical sensor and/or at least one electromagnetic sensor, and
wherein the annular base (21, 121) includes a plurality of shaped elements, and
wherein each shaped element defines one of the light receiving surfaces (23, 23a, 123, 227a, 227b) for receiving incident light from a respective adjacent light source, and
a plurality of the light receiving surfaces (23, 23a, 123, 227a, 227b) are orientated substantially transverse on the annular base (21, 121), and
wherein
• the shaped elements are in form of disconnections, recesses, holes or wedge-shaped protrusions (22, 122), extending away from the first plane,
• the light guide (20, 20a, 120, 220) is shaped to include two spaced-apart circumferential flanges (24, 25, 124, 125), each flange (24, 25, 124, 125) extending away from the annular base (21, 121) towards a viewable annular light exit (26, 26a, 27, 27a, 126, 127), the two viewable annular light exits radially spaced apart from each other, or
• the light guide (20, 20a, 120, 220) is shaped to include two spaced apart circumferential cylinders (24a, 25a), each cylinder (24a, 25a) extending away from the annular base (21, 121) towards a viewable annular light exit (26, 26a, 27, 27a, 126, 127), the two viewable light exits radially spaced apart from each other.

2. The assembly of claim 1, wherein
• the light guide (20, 20a, 120, 220) transitions from the annular base (21, 121) to the flange (24, 25, 124, 125) or cylinder(24a, 25a), sharply with a radius of less than 10% of a height of the flange (24, 25, 124, 125) or cylinder (24a, 25a), the sharp transition facilitating internal reflection of light emitted from the light sources,
• the circumferential flanges (124, 125) or cylinders (24a, 25a) are non-continuous to provide disconnections such that circumferential light entry points at disconnected surfaces on the circumference of the flanges (124, 125) or cylinders (24a, 25a) are provided,
• the annular light exit (126, 127) includes a plurality of steps, the steps promoting internal reflection,
• the light guide (20, 20a, 120, 220) is substantially transparent and without any visible discrete optic features in an un-lit state, while being diffusive in a lit state,
• the light guide (20, 20a, 120, 220) is substantially transparent and non-diffusive in both a lit and un-lit state, while the circumferential flanges (24, 25, 124, 125) or cylinders (24a, 25a) are substantially transparent in an un-lit state, while being diffusive in a lit state and/or
• a housing (10, 110) forming a backing of the light assembly is provided, which preferably incorporates transitional reflective optics that vary the amount of light reflected back into the circumferential flanges (24, 25, 124, 125) or cylinders (24a, 25a) and/or comprises a black material.

3. The assembly of claims 1 or 2, wherein
the light guide (220) also features a bridging member (227), manufactured from the same material as the light guide (220), which is located inside and bisects the substantially annular shape of the light guide (220), and the bridging member (227) has first and second ends which are disposed as light receiving surfaces (227a, 227b) and a light emitting surface along its major surface, wherein preferably the bridging member (227) has a substantially trapezoidal cross-section.

4. The assembly of one of the preceding claims, wherein
(a) the printed circuit board (30, 130) has an annular shape and/or is coated white around the plurality of LEDs (131), wherein preferably the printed circuit board (30, 130) includes additional light sources positioned adjacent to the light receiving surfaces (227a, 227b) to direct light into the bridging member (227), and/or
(b) a bridging member (227) is used in conjunction with a garnish, the garnish preferably comprising cut-outs in the form of lettering or a logo.

5. The assembly of one of the preceding claims, wherein
the assembly comprises a lens (40, 40a, 140, 518, 518', 518") having an outer component, preferably made from a clear material, and an inner component, preferably over moulded on the inner surface of the outer component and/or made from opaque material.

6. The assembly of claim 5, wherein
the inner or outer component joins to the housing (10, 110) and/or
the inner component sits on top of the printed circuit board (30, 130) and the shaped elements.

7. The assembly of one of the preceding claims, wherein
(i) the second medium is and/or comprises, at least one heated fluid, especially a cleaning fluid, preferably a cleaning gas and/or a cleaning liquid,
(ii) a medium receiving element of the second medium guide is connected to at least one fluid reservoir, especially at least one holding tank and/or storing at least partly the medium,
(iii) a medium exit element of the second medium guide comprises at least one nozzle, especially spray nozzle, wherein at least one nozzle is especially adapted such that the fluid is directed, especially sprayed, onto the at least one first surface of the design element.

8. The assembly of one of the preceding claims, wherein
(i) the sensing element detects rain, dust, dirt, snow and/or ice,
(ii) the sensing element further comprises at least one ultrasonic sensor, at least on a camera (513, 513', 513''), at least one capacitive sensor, at least one magnetic sensor and/or at least one conductibility sensor,
(iii) the assembly comprises at least one control element for controlling and/or regulating a flow of the second medium into a medium receiving element of the second medium guide, through a medium guide of the second medium guide, and/or out of an exit element of the second medium guide, especially based on signals of the sensing element,
(iv) the sensing element is at least indirectly in communication with the control element and/or at least one drive assistance system of the vehicle, especially a lane holding assistant, an object detection assistant, a parking assistant and/or a rear viewing assistant, and/or
(v) the sensing element is sensing contaminations of the first surface of the design element in a direction being mainly parallel to a normal direction of the first surface.

9. The assembly of the preceding claims, wherein
the sensing element is adapted for sensing contaminations of the first surface of the design element in a direction being mainly perpendicular to a normal direction of the first surface and/or parallel to the first surface.

10. A vehicle design element including and/or being connected to at least one medium distributing assembly according to one of the preceding claims.

11. The vehicle design element of claim 10, wherein
the sensing element is at least partly located in the first area on the side of the design element facing an antenna (515, 515''), wherein especially the first area is semitransparent and/or transmissible for third radiation, especially electromagnetic radiation within a third frequency band, detected by the sensing element and/or comprises at least one second area being semitransparent and/or transmissible for the third radiation.

12. The vehicle design element of claim 11, wherein
the design element comprises at least one substrate (523'') being transmissible for electromagnetic radiation and at least one first coating covering the substrate in the first area, the first coating being transmissible for electromagnetic radiation of the first frequency band and semitransparent, reflective and/or opaque for electromagnetic radiation having a frequency the second frequency band, wherein especially the second area is free of the first coating and/or comprises at least one second coating covering the substrate in the second area and being semitransparent and/or transmissible for the third radiation.

13. The vehicle design element of any one of the claims 10 to 12, wherein the second medium guide, a medium receiving element of the second medium guide, a medium exit element of the second medium guide, and/or the sensing element is/are at least partly located behind at least one bezel of the design element, wherein preferably the bezel is at least partly opaque for the first radiation and/or second radiation and/or transparent and/or semitransparent for the third radiation.

14. The vehicle design element of any one of the claims 10 to 13, wherein the design element is comprised at least partly by at least one radome (501, 501', 501") and/or forms at least partly at least one radome (501, 501', 501").

15. The vehicle design element of claim 14, wherein a medium exit element of the second medium guide is at least partly located on a side of the radome being located opposite an antenna (515, 515'').

16. The vehicle design element of claim 15, wherein the design element comprises at least one first medium distributing assembly and at least one second medium distributing assembly, wherein preferably the first medium distributing assembly and the second medium distributing assembly are at least partly integrally formed.

## Patentansprüche

1. Medienverteilungsanordnung für ein Fahrzeugdesignelement, wobei die Anordnung umfasst:
mindestens einen Medienleiter, umfassend:
• mindestens ein Medienempfangselement; und
• mindestens ein Medienausgangselement,
wobei das mindestens eine Medienausgangselement zumindest teilweise eine Ringform aufweist,
wobei ein erster Medienleiter ein Lichtleiter (20, 20a, 120, 220) ist und ein erstes Medium Licht ist, und
wobei der Lichtleiter (20, 20a, 120, 220) eine Mehrzahl von Lichtempfangsoberflächen (23, 23a, 123, 227a, 227b) aufweist; und
eine Mehrzahl von Lichtquellen, wobei die Lichtquellen benachbart zu entsprechenden Lichtempfangsoberflächen (23, 23a, 123, 227a, 227b) angeordnet und auf diese gerichtet sind, wobei die Mehrzahl von Lichtquellen in Form lichtemittierender Dioden (LEDs) (131) auf einer gedruckten Leiterplatte (30, 130) vorliegen,
wobei der Lichtleiter (20, 20a, 120, 220) geformt ist, um eine ringförmige Basis (21, 121), die in einer ersten Ebene liegt, und mindestens einen umlaufenden Flansch (24, 25, 124, 125) oder Zylinder (24a, 25a), der allgemein senkrecht angeordnet oder nach innen oder außen zur ersten Ebene ausgebreitet ist, zu definieren, wobei sich der Flansch (24, 25, 124, 125) oder Zylinder (24a, 25a) von der ringförmigen Basis weg (21, 121) in Richtung eines sichtbaren ringförmigen Lichtausgangs (26, 26a, 27, 27a, 126, 127) erstreckt,
**gekennzeichnet durch**
mindestens einen zweiten Medienleiter zum Zuführen eines zweiten Mediums, das mindestens ein Fluid ist und/oder umfasst, und
mindestens ein Abtastelement, ausgelegt zum Erkennen von Verunreinigungen auf mindestens einer ersten Oberfläche des Designelements,
wobei das Abtastelement mindestens einen optischen Sensor und/oder mindestens einen elektromagnetischen Sensor umfasst, und
wobei die ringförmige Basis (21, 121) eine Mehrzahl von geformten Elementen umfasst, und
wobei jedes geformte Element eine der Lichtempfangsoberflächen (23, 23a, 123, 227a, 227b) zum Empfangen von eintretendem Licht von einer entsprechenden benachbarten Lichtquelle definiert und eine Mehrzahl von den Lichtempfangsoberflächen (23, 23a, 123, 227a, 227b) im Wesentlichen quer auf der ringförmigen Basis (21, 121) ausgerichtet sind, und
wobei
• die geformten Elemente in der Form von Unterbrechungen, Ausnehmungen, Löchern oder keilförmigen Vorsprüngen (22, 122), die sich von der ersten Ebene weg erstrecken, vorliegen,
• der Lichtleiter (20, 20a, 120, 220) geformt ist, um zwei voneinander beabstandete Umfangsflansche (24, 25, 124, 125) aufzuweisen, wobei sich jeder Flansch (24, 25, 124, 125) von der ringförmigen Basis (21, 121) weg in Richtung eines sichtbaren ringförmigen Lichtausgangs (26, 26a, 27, 27a, 126, 127) erstreckt, wobei die zwei sichtbaren ringförmigen Lichtausgänge radial voneinander beabstandet sind, oder
• der Lichtleiter (20, 20a, 120, 220) geformt ist, um zwei voneinander beabstandete Umfangszylinder (24a, 25a) aufzuweisen, wobei sich jeder Zylinder (24a, 25a) von der ringförmigen Basis (21, 121) weg in Richtung eines sichtbaren ringförmigen Lichtausgangs (26, 26a, 27, 27a, 126, 127) erstreckt, wobei die zwei sichtbaren Lichtausgänge radial voneinander beabstandet sind.

2. Anordnung nach Anspruch 1, wobei
• der Lichtleiter (20, 20a, 120, 220) von der ringförmigen Basis (21, 121) zum Flansch (24, 25, 124, 125) oder Zylinder (24a, 25a) scharf mit einem Radius von weniger als 10 % einer Höhe des Flanschs (24, 25, 124, 125) oder Zylinders (24a, 25a) übergeht, wobei der scharfe Übergang eine interne Reflexion von Licht, das von den Lichtquellen emittiert wurde, erleichtert,
• die Umfangsflansche (124, 125) oder -zylinder (24a, 25a) nicht durchgehend sind, um Unterbrechungen derart bereitzustellen, dass umlaufende Lichteintrittspunkte an unterbrochenen Oberflächen auf dem Umfang der Flansche (124, 125) oder Zylinder (24a, 25a) bereitgestellt sind,
• der ringförmige Lichtausgang (126, 127) eine Mehrzahl von Stufen aufweist, wobei die Stufen interne Reflexion fördern,
• der Lichtleiter (20, 20a, 120, 220) im Wesentlichen transparent und in einem unbeleuchteten Zustand ohne sichtbare diskrete optische Merkmale ist, während er in einem beleuchteten Zustand diffusiv ist,
• der Lichtleiter (20, 20a, 120, 220) sowohl in einem beleuchteten als auch in einem unbeleuchteten Zustand im Wesentlichen transparent und nicht diffusiv ist, während die Umfangsflansche (24, 25, 124, 125) oder -zylinder (24a, 25a) in einem unbeleuchteten Zustand im Wesentlichen transparent sind, während sie in einem beleuchteten Zustand diffusiv sind, und/oder
• ein Gehäuse (10, 110), das einen Rückhalt der Lichtanordnung ausbildet, bereitgestellt ist, das vorzugsweise eine reflektierende Übergangsoptik einbindet, die die Menge des zurück in die Umfangsflansche (24, 25, 124, 125) oder - zylinder (24a, 25a) reflektierten Lichts variiert und/oder ein schwarzes Material umfasst.

3. Anordnung nach Anspruch 1 oder 2, wobei
der Lichtleiter (220) auch ein aus dem gleichen Material wie der Lichtleiter (220) hergestelltes Überbrückungselement (227) aufweist, das sich innerhalb der im Wesentlichen ringförmigen Form des Lichtleiters (220) befindet und diese schneidet, und das Überbrückungselement (227) ein erstes und zweites Ende, die als Lichtempfangsoberflächen (227a, 227b) angeordnet sind, und eine lichtemittierende Oberfläche entlang seiner Hauptoberfläche aufweist, wobei das Überbrückungselement (227) vorzugsweise einen im Wesentlichen trapezförmigen Querschnitt aufweist.

4. Anordnung nach einem der vorangehenden Ansprüche, wobei
(a) die gedruckte Leiterplatte (30, 130) eine Ringform aufweist und/oder rings um die Mehrzahl von LEDs (131) weiß beschichtet ist, wobei die gedruckte Leiterplatte (30, 130) vorzugsweise zusätzliche Lichtquellen umfasst, die den Lichtempfangsoberflächen (227a, 227b) benachbart positioniert sind, um Licht in das Überbrückungselement (227) zu leiten, und/oder
(b) ein Überbrückungselement (227) zusammen mit einer Verzierung verwendet wird, wobei die Verzierung vorzugsweise Ausschnitte in Form von Beschriftungen oder eines Logos umfasst.

5. Anordnung nach einem der vorangehenden Ansprüche, wobei
die Anordnung eine Linse (40, 40a, 140, 518, 518', 518") mit einer Außenkomponente, vorzugsweise hergestellt aus einem klaren Material, und einer Innenkomponente, vorzugsweise ausgebildet durch Umspritzen auf der Innenfläche der Außenkomponente und/oder hergestellt aus lichtundurchlässigem Material, umfasst.

6. Anordnung nach Anspruch 5, wobei
die Innen- oder Außenkomponente mit dem Gehäuse (10, 110) verbunden ist, und/oder
die Innenkomponente oben auf der gedruckten Leiterplatte (30, 130) und den geformten Elementen sitzt.

7. Anordnung nach einem der vorangehenden Ansprüche, wobei
(i) das zweite Medium mindestens ein erwärmtes Fluid, insbesondere ein Reinigungsfluid, vorzugsweise ein Reinigungsgas und/oder eine Reinigungsflüssigkeit, ist und/oder umfasst,
(ii) ein Medienempfangselement des zweiten Medienleiters mit mindestens einem Fluidbehälter, insbesondere mindestens einem Haltebehälter, verbunden ist, und/oder das Medium zumindest teilweise speichert,
(iii) ein Medienausgangselement des zweiten Medienleiters mindestens eine Düse, insbesondere eine Sprühdüse, umfasst, wobei mindestens eine Düse speziell derart ausgelegt ist, dass das Fluid auf die mindestens eine erste Oberfläche des Designelements gerichtet, insbesondere gespritzt, wird.

8. Anordnung nach einem der vorangehenden Ansprüche, wobei
(i) das Abtastelement Regen, Staub, Schmutz, Schnee und/oder Eis erkennt,
(ii) das Abtastelement ferner mindestens einen Ultraschallsensor, mindestens eine Kamera (513, 513', 513"), mindestens einen kapazitiven Sensor, mindestens einen magnetischen Sensor und/oder mindestens einen Leitfähigkeitssensor umfasst,
(iii) die Anordnung mindestens ein Steuerelement zum Steuern und/oder Regulieren des Stroms des zweiten Mediums in ein Medienempfangselement des zweiten Medienleiters, durch einen Medienleiter des zweiten Medienleiters und/oder aus einem Ausgangselement des zweiten Medienleiters, insbesondere basierend auf Signalen des Abtastelements, umfasst,
(iv) das Abtastelement mindestens indirekt im Austausch mit dem Steuerelement und/oder mindestens einem Antriebsunterstützungssystem des Fahrzeugs ist, insbesondere einem Spurhalteassistenten, einem Objekterkennungsassistenten, einem Parkassistenten und/oder einem Rückblickassistenten, und/oder
(v) das Abtastelement Verunreinigungen der ersten Oberfläche des Designelements in einer Richtung abtastet, die hauptsächlich parallel zu einer normalen Richtung der ersten Oberfläche ist.

9. Anordnung nach einem der vorangehenden Ansprüche, wobei
das Abtastelement zum Erkennen von Verunreinigungen der ersten Oberfläche des Designelements in einer Richtung, die hauptsächlich senkrecht zu einer normalen Richtung der ersten Oberfläche und/oder parallel zur ersten Oberfläche ist, ausgelegt ist.

10. Fahrzeugdesignelement, das mindestens eine Medienverteilungsanordnung nach einem der vorangehenden Ansprüche umfasst und/oder mit einer solchen verbunden ist.

11. Fahrzeugdesignelement nach Anspruch 10, wobei
sich das Abtastelement zumindest teilweise in dem ersten Bereich auf der Seite des Designelements, einer Antenne (515, 515") zugewandt, befindet, wobei insbesondere der erste Bereich semitransparent und/oder durchlässig für dritte Strahlung ist, insbesondere elektromagnetische Strahlung innerhalb eines dritten Frequenzbands, erkannt von dem Abtastelement, und/oder mindestens einen zweiten Bereich umfasst, der semitransparent und/oder durchlässig für die dritte Strahlung ist.

12. Fahrzeugdesignelement nach Anspruch 11, wobei
das Designelement mindestens ein Substrat (523"), das für elektromagnetische Strahlung durchlässig ist, und mindestens eine erste Beschichtung, die das Substrat im ersten Bereich bedeckt, umfasst, wobei die erste Beschichtung für elektromagnetische Strahlung des ersten Frequenzbands durchlässig und für elektromagnetische Strahlung mit einer Frequenz des zweiten Frequenzbands semitransparent, reflektierend und/oder undurchlässig ist, wobei insbesondere der zweite Bereich frei von der ersten Beschichtung ist und/oder
mindestens eine zweite Beschichtung umfasst, die das Substrat im zweiten Bereich bedeckt und semitransparent und/oder durchlässig für die dritte Strahlung ist.

13. Fahrzeugdesignelement nach einem der Ansprüche 10 bis 12, wobei
sich der zweite Medienleiter, ein Medienempfangselement des zweiten Medienleiters, ein Medienausgangselement des zweiten Medienleiters und/oder das Abtastelement mindestens teilweise hinter zumindest einer Einfassung des Designelements befindet/befinden, wobei die Einfassung vorzugsweise zumindest teilweise undurchlässig für die erste Strahlung und/oder zweite Strahlung und/oder transparent und/oder semitransparent für die dritte Strahlung ist.

14. Fahrzeugdesignelement nach einem der Ansprüche 10 bis 13, wobei
das Designelement zumindest teilweise von mindestens einem Radom (501, 501', 501'') umfasst ist, und/oder zumindest teilweise mindestens ein Radom (501, 501', 501") ausbildet.

15. Fahrzeugdesignelement nach Anspruch 14, wobei
sich ein Medienausgangselement des zweiten Medienleiters zumindest teilweise auf einer gegenüber einer Antenne (515, 515") befindlichen Seite des Radoms befindet.

16. Fahrzeugdesignelement nach Anspruch 15, wobei
das Designelement mindestens eine erste Medienverteilungsanordnung und mindestens eine zweite Medienverteilungsanordnung umfasst, wobei die erste Medienverteilungsanordnung und die zweite Medienverteilungsanordnung vorzugsweise zumindest teilweise einstückig ausgebildet sind.

## Revendications

1. Ensemble de distribution de support pour un élément décoratif de véhicule, ledit ensemble comprenant :
au moins un guidage de support comprenant :
• au moins un élément récepteur de support ; et
• au moins un élément de sortie de support,
où ledit au moins un élément de sortie de support présente une forme au moins partiellement annulaire,
où un premier guidage de support est un guide de lumière (20, 20a, 120, 220) et un premier support est de la lumière,
où le guide de lumière (20, 20a, 120, 220) comprend une pluralité de surfaces réceptrices de lumière (23, 23a, 123, 227a, 227b) ; et
une pluralité de sources lumineuses, lesdites sources lumineuses étant adjacentes à des surfaces réceptrices de lumière respectives (23, 23a, 123, 227a, 227b) et orientées vers celles-ci ; où la pluralité de sources lumineuses se présente sous forme de diodes électroluminescentes (LED) (131) sur un circuit imprimé (30, 130),
où le guide de lumière (20, 20a, 120, 220) est formé de manière à définir une base annulaire (21, 121) située dans un premier plan et au moins une bride circonférentielle (24, 25, 124, 125) ou un cylindre (24a, 25a) disposés de manière sensiblement orthogonale, ou évasés vers l'intérieur ou l'extérieur par rapport au premier plan, la bride (24, 25, 124, 125) ou le cylindre (24a, 25a) s'étendant à partir de la base annulaire (21, 121) vers une sortie lumineuse annulaire visible (26, 26a, 27, 27a, 126, 127), **caractérisé par**
au moins un deuxième guidage de support destiné à fournir un deuxième support qui est et/ou qui comprend au moins un fluide, et
au moins un élément de détection adapté pour la détection de souillures sur au moins une première surface de l'élément de design,
où l'élément de détection comprend au moins un capteur optique et/ou au moins un capteur électromagnétique, et
où la base annulaire (21, 121) comprend une pluralité d'éléments profilés, et
où chaque élément profilé définit une des surfaces réceptrices de lumière (23, 23a, 123, 227a, 227b) pour recevoir la lumière incidente provenant d'une source lumineuse adjacente respective, et où une pluralité des surfaces réceptrices de lumière (23, 23a, 123, 227a, 227b) sont orientées sensiblement transversalement sur la base annulaire (21, 121), et
où
• les éléments profilés se présentent sous forme de séparations, d'évidements, de trous ou de saillies (22, 122) en forme de coin s'étendant à partir du premier plan,
• le guide de lumière (20, 20a, 120, 220) est formé de manière à comporter deux brides circonférentielles espacées (24, 25, 124, 125), chaque bride (24, 25, 124, 125) s'étendant à l'opposé de la base annulaire (21, 121) vers une sortie lumineuse annulaire visible (26, 26a, 27, 27a, 126, 127), les deux sorties lumineuses annulaires visibles étant espacées radialement l'une de l'autre, ou
• le guide de lumière (20, 20a, 120, 220) est formé de manière à comprendre deux cylindres circonférentiels espacés (24a, 25a), chaque cylindre (24a, 25a) s'étendant à l'opposé de la base annulaire (21, 121) vers une sortie lumineuse annulaire visible (26, 26a, 27, 27a, 126, 127), les deux sorties lumineuses annulaires visibles étant radialement espacées l'une de l'autre.

2. Ensemble selon la revendication 1, où
• le guide de lumière (20, 20a, 120, 220) passe brusquement de la base annulaire (21, 121) à la bride (24, 25, 124, 125) ou au cylindre (24a, 25a), avec un rayon inférieur à 10 % de la hauteur de la bride (24, 25, 124, 125) ou du cylindre (24a, 25a), le passage brusque facilitant la réflexion interne de la lumière émise par les sources lumineuses,
• les brides circonférentielles (124, 125) ou les cylindres (24a, 25a) ne sont pas continus afin de réaliser des séparations telles que des points d'entrée de lumière circonférentiels sur des surfaces séparées sur la circonférence des brides (124, 125) ou des cylindres (24a, 25a) sont prévus,
• la sortie lumineuse annulaire (126, 127) comprend une pluralité de degrés, lesdits degrés favorisant la réflexion interne,
• le guide de lumière (20, 20a, 120, 220) est sensiblement transparent et sans aucune caractéristique optique discrète visible à l'état non allumé, tout en étant diffusant à l'état allumé,
• le guide de lumière (20, 20a, 120, 220) est sensiblement transparent et non diffusant à la fois à l'état allumé et à l'état non allumé, tandis que les brides circonférentielles (24, 25, 124, 125) ou les cylindres (24a, 25a) sont sensiblement transparents à l'état non allumé, tout en étant diffusant à l'état allumé et/ou
• un boîtier (10, 110) formant un soutien de l'ensemble lumineux est prévu, lequel incorpore de préférence des optiques de transition réfléchissantes faisant varier la quantité de lumière réfléchie vers les brides circonférentielles (24, 25, 124, 125) ou les cylindres (24a, 25a) et/ou comprend un matériau noir.

3. Ensemble selon la revendication 1 ou la revendication 2, où
le guide de lumière (220) comporte également un élément de pontage (227), fabriqué dans la même matière que le guide de lumière (220), disposé intérieurement et partageant en deux la forme sensiblement annulaire du guide de lumière (220), et où ledit élément de pontage (227) présente une première et une deuxième extrémités disposées en tant que surfaces réceptrices de lumière (227a, 227b) et une surface émettrice de lumière le long de sa surface principale, l'élément de pontage (227) ayant de préférence une section transversale sensiblement trapézoïdale.

4. Ensemble selon l'une quelconque des revendications précédentes, où
(a) la carte de circuit imprimé (30, 130) présente une forme annulaire et/ou est revêtue en blanc autour de la pluralité de LED (131), ladite carte de circuit imprimé (30, 130) comprenant de préférence des sources lumineuses supplémentaires adjacentes aux surfaces réceptrices de lumière (227a, 227b) pour diriger la lumière vers l'élément de pontage (227), et/ou
(b) un élément de pontage (227) est utilisé en conjonction avec une garniture, ladite garniture comprenant de préférence des découpes sous forme de lettres ou d'un logo.

5. Ensemble selon l'une quelconque des revendications précédentes, où
ledit ensemble comprend une lentille (40, 40a, 140, 518, 518', 518") ayant un composant extérieur, de préférence constitué d'un matériau transparent, et un composant intérieur, de préférence surmoulé sur la surface intérieure du composant extérieur et/ou en matériau opaque.

6. Ensemble selon la revendication 5, où
le composant intérieur ou extérieur est raccordé au boîtier (10, 110) et/ou
le composant intérieur repose sur la carte de circuit imprimé (30, 130) et les éléments profilés.

7. Ensemble selon l'une quelconque des revendications précédentes, où
(i) le deuxième support est et/ou comprend au moins un fluide chauffé, en particulier un liquide de nettoyage, de préférence un gaz de nettoyage et/ou un liquide de nettoyage,
(ii) un élément récepteur de support du deuxième guidage de support est raccordé à au moins un réservoir de fluide, en particulier à au moins un réservoir de rétention et/ou de stockage au moins en partie du support,
(iii) un élément de sortie du deuxième guidage de support comprend au moins une buse, en particulier une buse de pulvérisation, au moins une buse étant spécialement adaptée de sorte que le fluide est dirigé, en particulier pulvérisé, sur ladite au moins une première surface de l'élément décoratif.

8. Ensemble selon l'une quelconque des revendications précédentes, où
(i) l'élément de détection détecte la pluie, la poussière, la saleté, la neige et/ou la glace ;
(ii) l'élément de détection comprend en outre au moins un capteur à ultrasons, au moins sur une caméra (513, 513', 513"), au moins un capteur capacitif, au moins un capteur magnétique et/ou au moins un capteur de conductivité,
(iii) l'ensemble comprend au moins un élément de commande pour commander et/ou réguler le débit du deuxième support vers un élément récepteur de support du deuxième guidage de support, par un guidage de support du deuxième guidage de support, et/ou à partir d'un élément de sortie du deuxième guidage de support, en particulier sur la base de signaux de l'élément de détection,
(iv) l'élément de détection est au moins indirectement en communication avec l'élément de commande et/ou au moins un système d'aide à la conduite du véhicule, en particulier un assistant de maintien de voie, un assistant de détection d'objets, un assistant de stationnement et/ou un assistant de rétrovision, et/ou
(v) l'élément de détection détecte des souillures de la première surface de l'élément décoratif dans une direction principalement parallèle à une direction normale de la première surface.

9. Ensemble selon les revendications précédentes, où
l'élément de détection est adapté pour détecter des souillures de la première surface de l'élément décoratif dans une direction principalement perpendiculaire à une direction normale de la première surface et/ou parallèle à la première surface.

10. Élément décoratif de véhicule, comprenant, et/ou étant raccordé à, au moins un ensemble de distribution de support selon l'une quelconque des revendications précédentes.

11. Élément décoratif de véhicule selon la revendication 10, où
l'élément de détection est au moins partiellement disposé dans la première zone sur le côté de l'élément décoratif faisant face à une antenne (515, 515"), la première zone étant en particulier semi-transparente et/ou transmettant un troisième rayonnement, en particulier un rayonnement électromagnétique dans une troisième bande de fréquences, détecté par l'élément détecteur et/ou comprend au moins une deuxième zone semi-transparente et/ou transmettant le troisième rayonnement.

12. Élément décoratif de véhicule selon la revendication 11, où
l'élément décoratif comprend au moins un substrat (523") transmettant un rayonnement électromagnétique et au moins un premier revêtement recouvrant le substrat dans la première zone, ledit premier revêtement transmettant un rayonnement électromagnétique de la première bande de fréquences et étant semi-transparent, réfléchissant et/ou opaque pour un rayonnement électromagnétique ayant une fréquence dans la deuxième bande de fréquences, la deuxième zone étant en particulier exempte du premier revêtement et/ou
comprenant au moins un deuxième revêtement recouvrant le substrat dans la deuxième zone et semi-transparent, et/ou transmettant le troisième rayonnement.

13. Élément décoratif de véhicule selon l'une quelconque des revendications 10 à 12, où le deuxième guidage de support, un élément récepteur de support du deuxième guidage de support, un élément de sortie de support du deuxième guidage de support, et/ou l'élément détecteur est/sont au moins partiellement disposés derrière au moins une lunette de l'élément décoratif, où, de préférence, la lunette est au moins partiellement opaque au premier rayonnement et/ou au deuxième rayonnement et/ou transparente et/ou semi-transparente au troisième rayonnement.

14. Élément décoratif de véhicule selon l'une quelconque des revendications 10 à 13, où l'élément décoratif est composée par au moins en partie un radôme (501, 501', 501") et/ou forme au moins partiellement au moins un radôme (501, 501', 501").

15. Élément décoratif de véhicule selon la revendication 14, où
un élément de sortie de support du deuxième guidage de support est au moins partiellement disposé sur un côté du radôme situé opposé à une antenne (515, 515").

16. Élément décoratif de véhicule selon la revendication 15, où
l'élément décoratif comprend au moins un premier ensemble de distribution de support et au moins un deuxième ensemble de distribution de support, le premier ensemble de distribution de support et le deuxième ensemble de distribution de support étant de préférence au moins en partie formés de manière intégrée.
